Europäisches Patentamt

European Patent Office

Office européen des brevets

(19)

(11) Veröffentlichungsnummer: **0 144 456**

**A1**

(12) **EUROPÄISCHE PATENTANMELDUNG**

(21) Anmeldenummer: **83112287.4**

(22) Anmeldetag: **07.12.83**

(51) Int. Cl.⁴: **A 23 L 3/36**
**A 23 L 3/18, A 23 L 3/04**
**A 23 G 7/02, F 26 B 25/06**
**F 25 D 13/06, A 47 J 37/04**

(43) Veröffentlichungstag der Anmeldung:
**19.06.85 Patentblatt 85/25**

(84) Benannte Vertragsstaaten:
**AT DE GB IT NL**

(71) Anmelder: **Sollich, Helmut**
**Karschau 54**
**D-2341 Rabenkirchen(DE)**

(72) Erfinder: **Sollich, Helmut**
**Karschau 54**
**D-2341 Rabenkirchen(DE)**

(74) Vertreter: **Patentanwälte Dipl.-Ing. Rudolf Bibrach**
**Dipl.-Ing. Elmar Rehberg**
**Postfach 1453 Pütterweg 6**
**D-3400 Göttingen(DE)**

(54) **Tunnel zum Kühlen, Wärmen oder Trocknen von Produkten der Nahrungsmittel-, insbesondere der Süsswarenindustrie.**

(57) Die Erfindung betrifft einen Tunnel zum Kühlen, Wärmen oder Trocknen von Produkten der Nahrungsmittel-, insbesondere der Süßwarenindustrie, mit einem durch den Tunnel hindurchlaufenden Transportband, wobei der Tunnel aus einer beliebigen Anzahl hintereinander angeordneter, entfernbarer Hauben abgedeckt ist und erfindungsgemäß die den Tunnel bildenden Hauben (5) mit dessen Boden (1) über Spreizglieder (15, 15') verbunden und unabhängig voneinander bis über das Transportband (4) hinaus hochhebbar sind.

Fig. 2

EP 0 144 456 A1

0144456

- 1 -

Tunnel zum Kühlen, Wärmen oder Trocknen von Produkten der Nahrungsmittel-, insbesondere Süßwarenindustrie

Die Erfindung betrifft einen Tunnel zum Kühlen, Wärmen oder Trocknen von Produkten der Nahrungsmittel-, insbesondere der Süßwarenindustrie. In solchen Tunneln werden die verschiedensten Warenstücke auf einem durch den Tunnel hindurchlaufenden Transportband einem Kühl- oder Wärmeluftstrom ausgesetzt, um sie in ihrem jeweiligen Zustand zu bearbeiten oder zu verändern. Dabei ist es bekannt, den Tunnel aus einer beliebigen Anzahl hintereinander angeordneter Abdeckhauben zu bilden. Zum Zwecke der Reinigung der Anlage ist es notwendig, die einzelnen Hauben zu entfernen. Sie können vom Tunnelboden abgehoben und auf einem freien Platz abgesetzt werden. Dies ist bei großen Abmessungen der Hauben bzw. großen Bandbreiten wegen des Haubengewichtes mit Schwierigkeiten verbunden. Außerdem werden die Haubenränder beim Absetzen verunreinigt oder gar beschädigt. Ebenso ist es auch bekannt, einzelne Hauben aus dem Tunnel herauszuheben und die verbleibenden Hauben in die entstehende Lücke zu verschieben, um so allmählich das Transportband freizulegen. Auch dieser Vorgang ist mit Schwierigkeiten verbunden und vor allem sehr zeitraubend. Schließlich sind auch Anlagen bekannt, bei denen die einzelnen Hauben über eine Ecke hinweg nach der Seite hin hochgeklappt werden oder es sind im Tunnel Traggestelle vorgesehen, in denen Haubenteile um Scharniere oder Gelenke aufklappbar sind. Solche Lösungen erschweren und verteuern den gesamten Aufbau der Anlage und haben vor allem den Nachteil, daß zwischen den Stoßflächen der am Traggestell angelenkten Haubenteile Spalte entstehen, die nur schlecht abzudichten sind und erfahrungsgemäß zu einem Kühlmittel- oder Wärmeluftverlust führen. Allen bekannten Ausführungen ist aber gemein, daß bei großen Bandbreiten jede Reinigung und etwa notwendige Reparaturen außerordentlich mühevoll und zeitraubend sind.

Aufgabe der Erfindung ist es, alle diese Mängel der bekannten Tunnelausführungen zu beheben und einen Tunnel
zu schaffen, dessen Hauben in einfachster Weise und ohne
nennenswerten Kraftaufwand zu entfernen sind, ohne daß
die einzelnen Hauben verunreinigt oder beschädigt werden,
wobei ein ausreichend großer Platz für eine bequeme und
gründliche Reinigung zur Verfügung steht.

Dies wird erfindungsgemäß dadurch erreicht, daß die den
Tunnel bildenden Hauben mit dessen Boden über Spreizglieder
verbunden und unabhängig voneinander bis über das Transportband hinaus hochhebbar sind. Dabei wird eine leichte und
einfache Handhabung der Hauben dadurch erreicht, daß die
Hauben in sich formsteife, im Querschnitt U-förmige Körper
aus Hartschaumstoff, z.B. Polyurethan o. dgl., mit fester
Außenhaut sind. Andererseits sind die Spreizglieder aus jeweils einem Kniehebeltrieb gebildet, wobei die Spreizglieder
mit Sperren, Rasten, Klinken od. dgl. zum Festhalten der
Hauben in ihrer hochgehobenen und/oder abgesenkten Stellung
versehen sind. Vorzugsweise sitzen die Hauben mit ihren
unteren Rändern auf dem Tunnelboden in einer Nut- und Federführung, wobei die Hauben auf dem Tunnelboden in der Nut- und
Federführung längsverschiebbar sind. Schließlich weisen die
Spreizglieder eine, die Längsverspannung der Hauben zulassende
Bewegungsfreiheit auf. Andererseits können die Spreizglieder
mit einer sie in ihre jeweilige Endstellung drückenden Feder
ausgestattet sein, die die Hauben zusätzlich auf den Tunnelboden drücken oder in ihrer hochgehobenen Lage sichern.

Die Dichtheit des Tunnels wird dadurch gesichert, daß die
Hauben an ihren offenen Kopfseiten mit elastischen Dichtungen
versehen sind und eine, die hintereinander angeordneten Hauben
in Tunnellängsrichtung zusammenhaltende Spannvorrichtung vorgesehen ist.

Die Vorteile der erfindungsgemäßen Einrichtung liegen in
dem einfachen Aufbau und der vereinfachten, leichten Bedienungsmöglichkeit. Der gesamte Reinigungsbereich wird
durch vertikales Hochheben der Hauben freigelegt. Es entstehen keine zusätzlichen Abdichtungsprobleme. Im geschlossenen Zustand ist der Tunnel absolut dicht, so daß
Temperaturschwankungen und Luftverluste weitgehend ausgeschaltet sind. Eine zusätzliche Rahmenkonstruktion, wie sie
bisher für die Lagerung der einzelnen Hauben erforderlich
war, kommt völlig in Wegfall. Das Liften der einzelnen Hauben
kann wahlweise und mit geringstem Kraftaufwand erfolgen.

Der Erfindungsgedanke läßt die verschiedensten Ausführungsmöglichkeiten zu. Eine davon ist in den anliegenden Zeichnungen
wiedergegeben, und zwar zeigen:

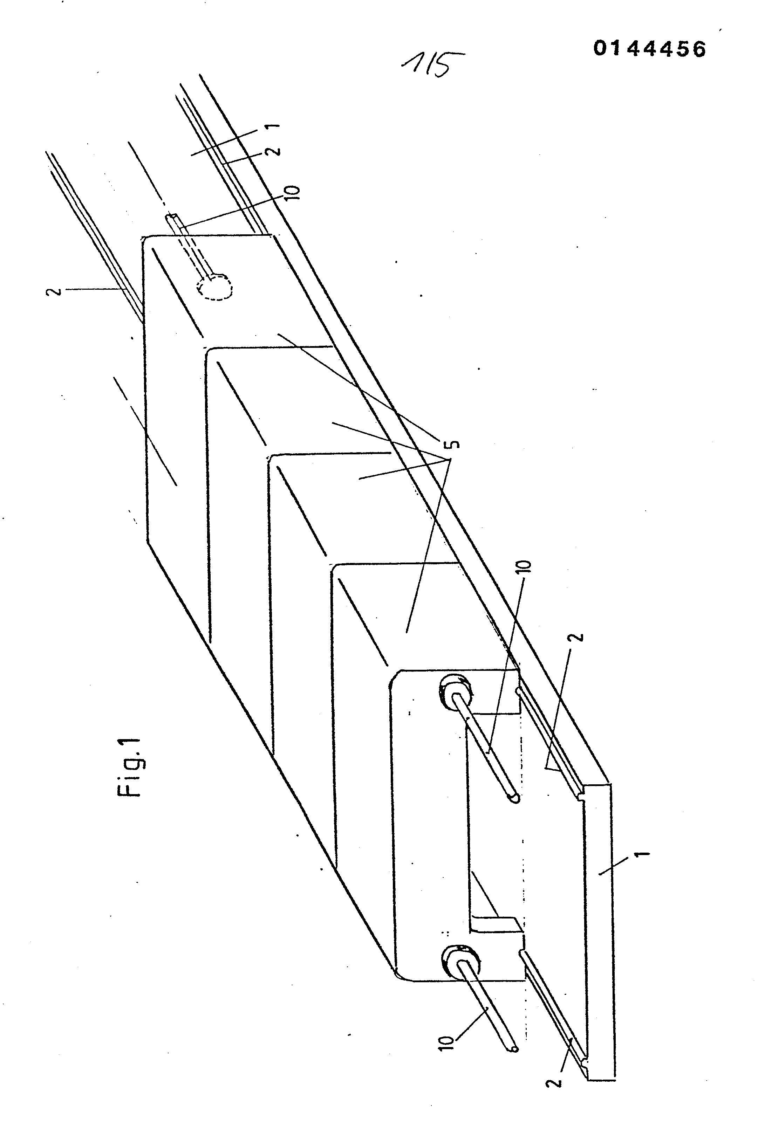

Fig. 1          eine perspektivische Ansicht eines Tunnels
                zum Kühlen, Wärmen oder Trocknen der verschiedensten Produkte bei Fortlassung des
                Transportbandes;

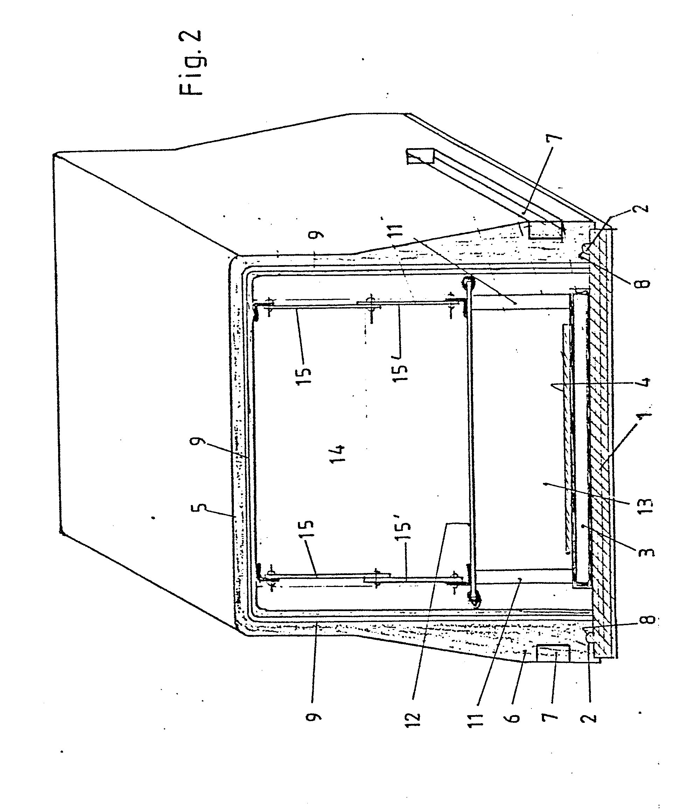

Fig. 2          einen Tunnelquerschnitt in anderem Maßstab;

Fig. 3          eine Seitenansicht des Tunnels bei geschlossenen
                Hauben;

Fig. 4          den Tunnel im Längsschnitt    und

Fig. 5 und 6    verschiedene Darstellungen des Spreizmechanismusses
                in vergrößertem Maßstab.

Auf einem entsprechend langen, ebenen Tunnelboden 1, der zu
beiden Seiten auf seiner Oberfläche mit einem der Länge nach
verlaufenden Schiebefalz 2 versehen ist, liegt beispielsweise eine Kühlplatte 3, über die hinweg ein Transportband 4, beispielsweise ein Gitterband, läuft.

Von oben her sind auf den Tunnelboden 1 dicht hintereinanderliegende Abdeckhauben 5 aufgesetzt, die im Querschnitt U-förmige
Gestalt haben und am Ende ihrer nach unten reichenden Seitenwandungen 6 so weit verdickt sind, daß auf der Außenseite Griffmulden 7 vorgesehen werden können, die das Abheben der Haube 5
vom Tunnelboden ermöglichen, aber nicht nach der Kanalinnenseite
durchgehen. Entsprechend dem Verlauf des Schiebefalzes 2 auf dem
Boden 1 sind in der Aufsitzfläche der Haube zu beiden Seiten jeweils eine längsverlaufende Nute 8 vorgesehen. Schiebefals 2 und
Nute 8 gestatten eine Längsverschiebung der einzelnen Hauben 5
auf dem Boden 1, wobei in den Kopfseiten der Haube eine Dichtung
9 eingelegt ist, die den Spalt zwischen zwei aneinandergeschobenen Hauben verschließt.

Die Hauben 5 sind in sich formsteif und bilden, wie gesagt, einen
U-förmigen Festkörper aus Schaumstoff, wie z.B. Polyurethan, der
allseits mit einer festen Haut überzogen ist. Die Haube hat bei
relativ leichtem Gesamtgewicht eine große Festigkeit und vermag
allen im Betrieb etwa auftretenden mechanischen Beanspruchungen
zu widerstehen.

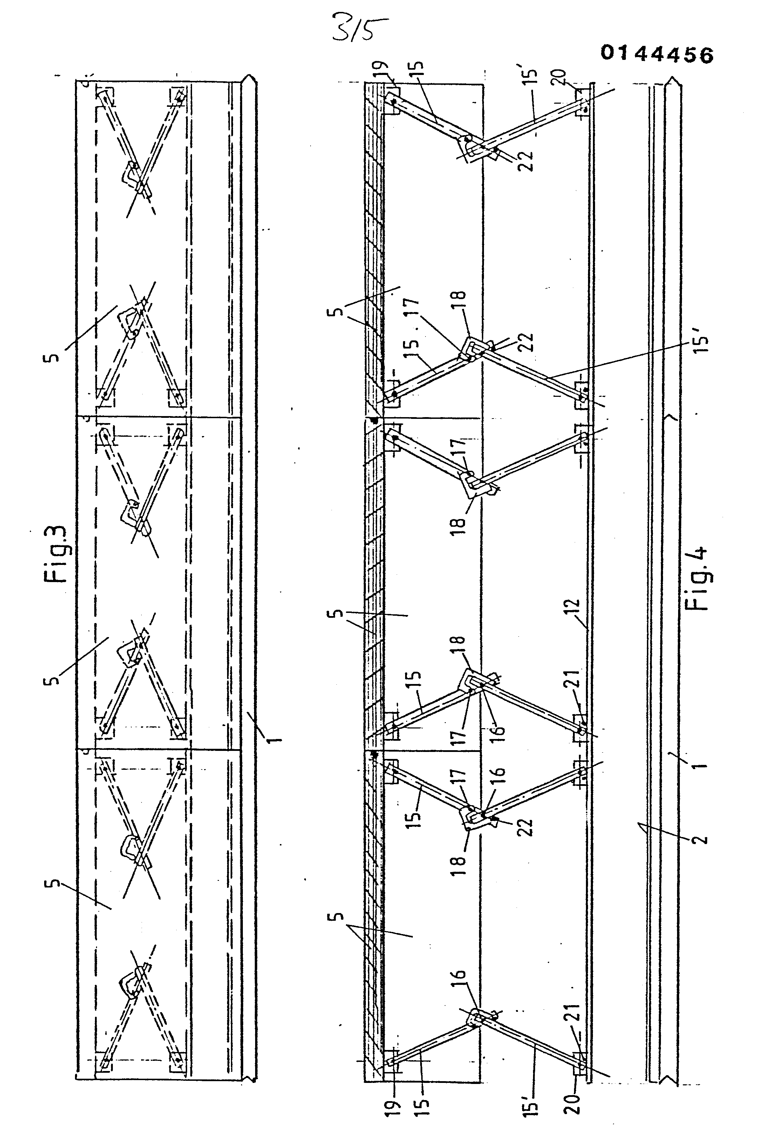

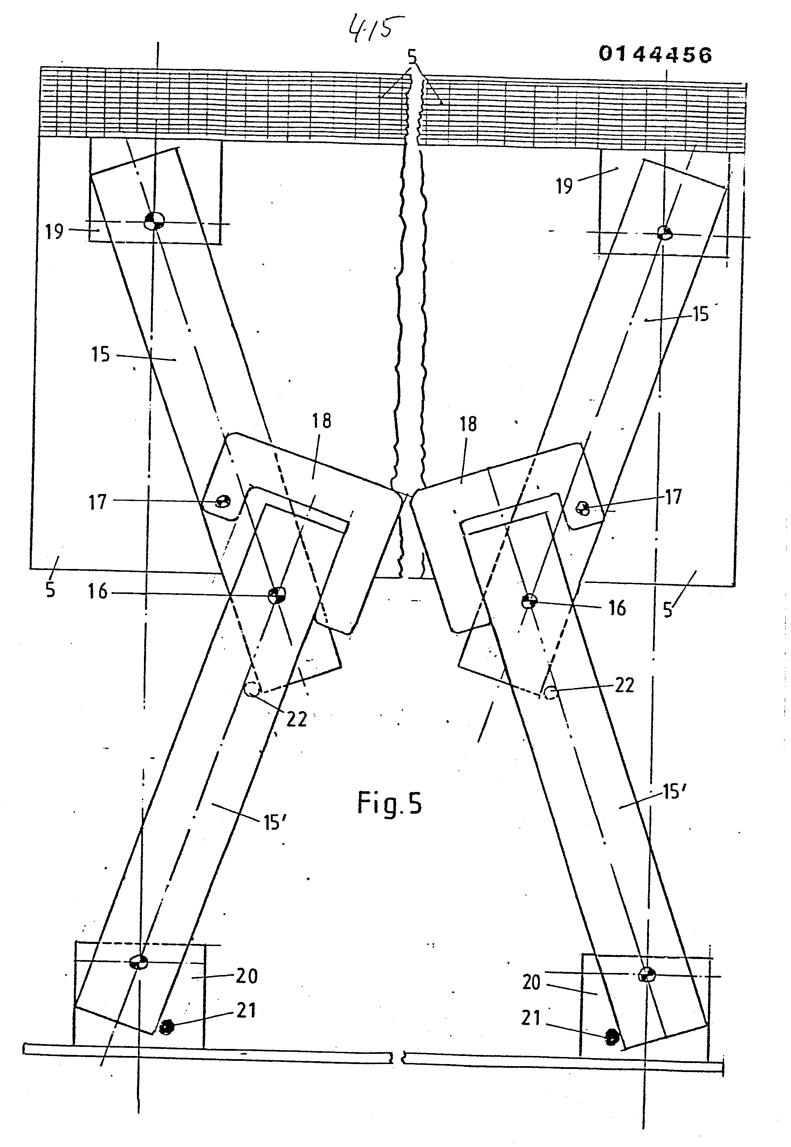

Im Innern des Kanals sitzt auf Stützen 11 in einem gewissen Abstand vom Kanalboden ein Zwischenboden 12, der den Warenkanal 13
über dem Transportband abteilt. In dem über dem Zwischenboden 12
liegenden Belüftungsraum 14 sitzen zu beiden Seiten dicht an den
Innenwänden der Hauben Spreizhebel, die gemäß Fig. 4 jeweils aus
einem Kniehebelpaar 15, 15' gebildet sind. Über Gelenkzapfen 16
sind die Hebelpaare 15, 15' gelenkig miteinander verbunden,
wobei im Bereich des Gelenkes um einen Zapfen 17 schwenkbar jeweils eine Klinke 18 gelagert ist, die über das Kopfende des
Hebels 15' hinwegklinkt, sobald gemäß Fig. 4 die jeweilige Haube 5 entsprechend weit hochgehoben wird. An jeder Innenwand
der Haube 5 sind dabei jeweils zwei, d.h., an jeder Haube
insgesamt vier Hebelpaare 15, 15' vorgesehen, um ein gleichmäßiges Hochheben der Haube zu erreichen. In der Innenwand
der Haube 5 sind die Hebel 15 in Lagern 19 gelagert und die
Hebel 15' in Lagerböcken 20, wobei in diesen noch Anschläge
21 o. dgl. vorgesehen sind, die den Hebelausschlag begrenzen.
Entsprechende Anschläge 22 können auch an den Hebeln 15 vorgesehen sein. Die Sperrklinken 18 können zum Zwecke des Absenkens der Haube 5 leicht von unten her um den Zapfen 17
hochgeklappt werden, so daß sich die beiden Kniehebel 15, 15'
aus der gestreckten Lage gemäß Fig. 4 oder 5 in die eingeknickte Stellung gemäß Fig. 3 zurückbewegen können.

Von besonderer Wichtigkeit ist, daß infolge der gezeigten Anordnung der Kniehebelpaare beim Einknicken den Hauben 5 eine
gewisse Bewegungsfreiheit in Längsrichtung des Kanals gegeben
ist, so daß es möglich ist, mittels der Spannelemente 10 die
Hauben in Längsrichtung dichtend aneinanderrücken oder vor dem
Hochheben die einzelnen Hauben so weit voneinander abzurücken,
daß sie ohne Beschädigung der Dichtung und unabhängig voneinander von dem Tunnelboden 1 abgehoben werden können.

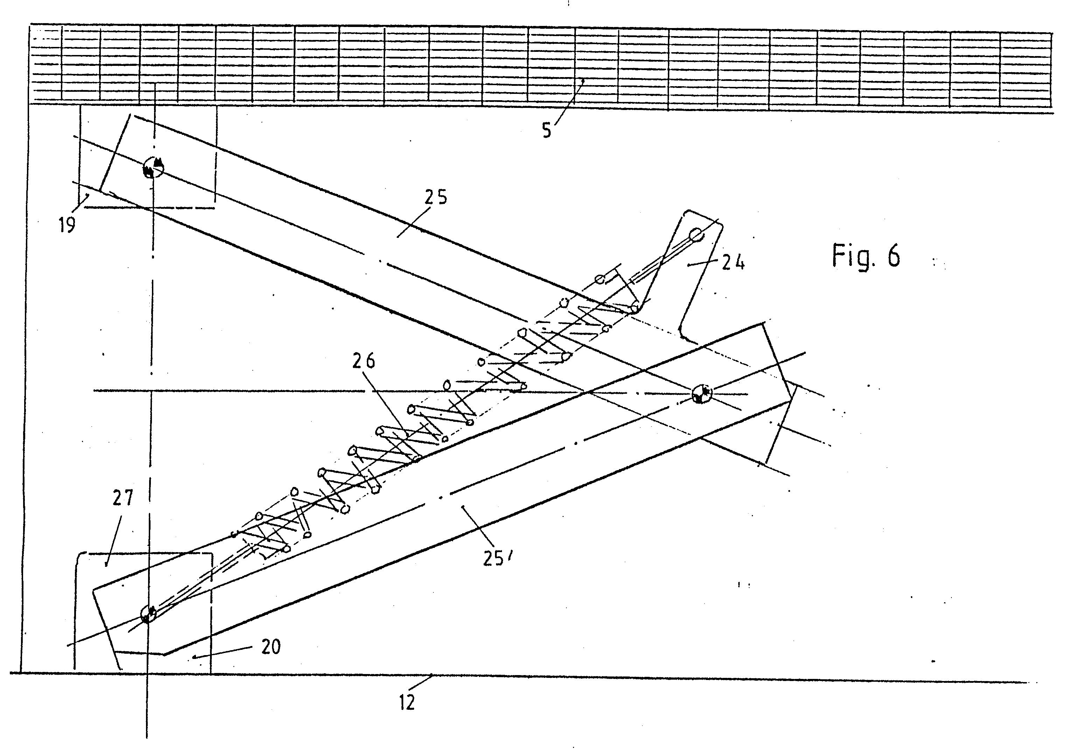

Schließlich zeigt Fig. 6 noch eine andere Ausbildungsmöglichkeit für die Kniehebel, wobei die beiden Kniehebelteile 25 und
25', ähnlich wie vorher, aneinander angelenkt sind, aber der
eine Hebel 25 mit einem vorspringenden Halter 24 versehen ist,
an welchem eine im Lager 27 angreifende Zugfeder 26 befestigt
ist. Die Anordnung der Teile ist in diesem Fall so getroffen,
daß beim Hochheben der Hauben 5 die Hebel 25 und 25' über eine
gewisse Strecklage hinausgehen, wobei die Feder 26 auf die
andere Seite des jeweiligen Hebels 25' gelangt und die beiden

- 6 -

Hebel 25 und 25' in ihrer Strecklage, die der hochgehobenen
Haube entspricht, gehalten und gesichert werden.

Selbstverständlich ist die Erfindung nicht beschränkt auf
eine besondere Ausführungsform der Spreizglieder. So könnten
beispielsweise auch Spreizvorrichtungen nach Art einer sog.
Nürnberger Schere o.ä. Anwendung finden.

# BIBRACH & REHBERG     0144456

## ANWALTSSOZIETÄT

BIBRACH & REHBERG, POSTFACH 738, D-3400 GÖTTINGEN

PATENTANWALT DIPL.-ING. RUDOLF BIBRACH
PATENTANWALT DIPL.-ING. ELMAR REHBERG

EUROPEAN PATENT ATTORNEYS
MANDATAIRES EN BREVETS EUROPEENS

TELEFON: (0551) 45034/35
TELEX: 96616 bipat d
POSTSCHECKKONTO: HANNOVER
    (BLZ 25010030) NR. 115763-301
BANKKONTEN:     DEUTSCHE BANK AG GÖTTINGEN
    (BLZ 26070072) NR. 01/85900
    COMMERZBANK GÖTTINGEN
    (BLZ 26040030) NR. 6425722

| IHR ZEICHEN<br>YOUR REF.<br>VOTRE REF. | IHR SCHREIBEN VOM<br>YOUR LETTER<br>VOTRE LETTRE | UNSER ZEICHEN<br>OUR REF.<br>NOTRE REF. | D-3400 GÖTTINGEN,<br>PÜTTERWEG 6 |
|---|---|---|---|
| | | 11.388/n3 | 30.11.1983 |

Helmut Sollich, Karschau 54, D-2341 Rabenkirchen

Tunnel zum Kühlen, Wärmen oder Trocknen von Produkten der
Nahrungsmittel-, insbesondere Süßwarenindustrie

## Patentansprüche:

1. Tunnel zum Kühlen, Wärmen oder Trocknen von Produkten
der Nahrungsmittel-, insbesondere der Süßwarenindustrie,
mit einem durch den Tunnel hindurchlaufenden Transportband,
wobei der Tunnel aus einer beliebigen Anzahl hintereinander
angeordneter, entfernbarer Hauben abgedeckt ist, dadurch gekennzeichnet, daß die den Tunnel bildenden Hauben (5) mit
dessen Boden (1) über Spreizglieder (15, 15', 25, 25') verbunden und unabhängig voneinander bis über das Transportband (4) hinaus hochhebbar sind.

2. Tunnel nach Anspruch 1, dadurch gekennzeichnet, daß die
Hauben (5) in sich formsteife, im Querschnitt U-förmige Körper
aus Hartschaumstoff, z.B. Polyurethan o. dgl., mit fester
Außenhaut sind.

3. Tunnel nach Anspruch 1 und 2, dadurch gekennzeichnet, daß die Spreizglieder (15, 15', 25, 25') aus jeweils einem Kniehebeltrieb gebildet sind.

4. Tunnel nach Anspruch 1 bis 3, dadurch gekennzeichnet, daß die Spreizglieder (15, 15', 25, 25') mit Sperren, Rasten, Klinken od. dgl. (16) zum Festhalten der Hauben (5) in ihrer hochgehobenen und/oder abgesenkten Stellung versehen sind.

5. Tunnel nach Anspruch 1 bis 4, dadurch gekennzeichnet, daß sich die Hauben (5) mit ihren unteren Rändern (6) auf dem Tunnelboden (1) in einer Nut- und Federführung (2, 8) sitzen.

6. Tunnel nach Anspruch 5, dadurch gekennzeichnet, daß die Hauben (5) auf dem Tunnelboden (1) in der Nut-und Federführung (2, 8) längsverschiebbar sind.

7. Tunnel nach Anspruch 1 bis 6, dadurch gekennzeichnet, daß die Spreizglieder (15, 15', 25, 25') eine, die Längsverspannung der Hauben (5) zulassende Bewegungsfreiheit aufweisen.

8. Tunnel nach Anspruch 1 bis 7, dadurch gekennzeichnet, daß die Spreizglieder (15, 15', 25, 25') mit einer sie in ihre jeweilige Endstellung drückenden Feder (26) ausgestattet sind.

9. Tunnel nach Anspruch 1 bis 8, dadurch gekennzeichnet, daß die Hauben (5) an ihren offenen Kopfseiten mit elastischen Dichtungen (9) versehen sind.

10. Tunnel nach Anspruch 1 bis 9, gekennzeichnet durch eine, die hintereinander angeordneten Hauben (5) in Tunnellängsrichtung zusammenhaltende Spannvorrichtung (10).

Fig.1

0144456

Fig. 2

0144456

Fig.3

Fig.4

Fig.5

Fig. 6

# EUROPÄISCHER RECHERCHENBERICHT

Europäisches
Patentamt

EP 83 11 2287

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-3 583 171 (C.M. FLYNN et al.) <br> * Anspruch 1; Spalte 2, Zeilen 1-41; Abbildungen 1,4 * | 1,2 | A 23 L 3/36 <br> A 23 L 3/18 <br> A 23 L 3/04 <br> A 23 G 7/02 <br> F 26 B 25/06 <br> F 25 D 13/06 <br> A 47 J 37/04 |
| A | | 9 | |
| | --- | | |
| Y | US-A-3 472 570 (J.K. MORAN) <br> * Ansprüche 1,3,6,8; Abbildungen 1,2; Spalte 4, Zeilen 8-23 * | 1,2 | |
| A | | 10 | |
| | --- | | |
| Y | US-A-3 843 315 (E. SORENSEN) <br> * Abbildungen 2,2A,3 * | 1,3,4 | |
| | --- | | RECHERCHIERTE SACHGEBIETE (Int. Cl. ³) |
| Y | FR-A-2 216 534 (HEAT & CONTROL INC.) <br> * Abbildungen 2,3,8; Seite 3, Zeile 14 - Seite 4, Zeile 13; Seite 10, Zeilen 10-37 * | 1,4 | A 23 L <br> A 23 G <br> F 26 B <br> F 25 D <br> A 21 B |
| | --- | | |
| Y | US-A-1 666 335 (R. LENTZ) <br> * Abbildungen 12,4,5,1 * | 1,3,4 | A 47 J <br> F 28 C |
| | --- | | |
| A | DE-A-2 322 918 (SOLLICH) <br> * Abbildung 2 * | 5,6 | |
| | --- | | |
| A | US-A-3 757 533 (J.T. KENT) | | |
| | ----- | | |

Der vorliegende Recherchenbericht wurde für alle Patentansprüche erstellt.

| Recherchenort <br> DEN HAAG | Abschlußdatum der Recherche <br> 16-07-1984 | Prüfer <br> GUYON R.H. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82